# EUROPEAN PATENT APPLICATION

(11) **EP 4 730 536 A1**
(43) Date of publication of application: **22.04.2026**
(21) Application number: 24915559.9
(22) Date of filing: 10.12.2024
(51) Int. Cl.: H01M 50/383, H01M 50/367, H01M 50/375, H01M 50/342, H01M 10/6568, H01M 10/613, H01M 50/249

(54) **BATTERY PACK AND VEHICLE INCLUDING SAME**

(30) Priority: 02.01.2024 KR 20240000306
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/020193
(87) International publication number: WO 2025/146977

(57) **Abstract**

The present disclosure relates to a battery pack including: a plurality of battery cells; and a pack case including a body frame configured to store the plurality of battery cells and have an opening formed on at least one side, and a cover frame provided in the opening of the body frame so as to be located on a side where venting gas is discharged from the plurality of battery cells and having a cooling path formed in an inner space such that a cooling medium flows therethrough.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0000306, filed on January 02, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity.

A common method for configuring a battery pack by connecting a plurality of battery cells in series/parallel is to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

However, in the case where a battery pack includes multiple battery modules therein, it may be vulnerable to a chain thermal reaction between the battery modules. For example, if an event such as thermal runaway occurs inside one battery module, the thermal runaway may propagate to other battery modules. If the propagation of thermal runaway between the battery modules fails to be properly suppressed, an event occurring in a specific battery module may cause a chain thermal reaction in other battery modules, leading to explosion or fire and worsening the same.

In particular, if an event such as thermal runaway occurs in one battery module, venting gas or the like may be discharged to the outside of the battery module. In this case, if the heat of the discharged venting gas is not properly cooled, the heat may be transferred to other battery modules, causing a thermal chain reaction in other battery modules.

Accordingly, conventional battery packs have constructed cooling systems by providing flame-retardant materials on the bottom surface of the battery pack or between battery modules to minimize the accumulation of thermal energy in adjacent battery modules. However, although such conventional battery packs may cool the bottom surface of the battery module, they are insufficient for cooling the discharged venting gas or the like when an event such as thermal runaway occurs in the battery module.

Therefore, there is a need to develop a structure capable of more efficiently cooling the heat of the discharged venting gas or the like when an event such as thermal runaway occurs in the battery pack, thereby improving the cooling performance of the battery pack.

### DISCLOSURE

### Technical Problem

The present disclosure is designed to solve the problems of the related art, and therefore the present disclosure is directed to providing a battery pack with enhanced cooling performance by improving the structure to appropriately manage heat or venting gas discharged from the battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case comprising a body frame configured to store the plurality of battery cells and have an opening formed on at least one side, and a cover frame provided in the opening of the body frame so as to be located on a side where venting gas is discharged from the plurality of battery cells and having a cooling path formed in an inner space such that a cooling medium flows therethrough.

The cover frame may have a venting path disposed on at least one side of the cooling path in an inner space and configured to allow the venting gas to flow therethrough.

The cooling path and the venting path may be disposed in parallel along a direction from an outside to an inside of the cover frame.

The cooling path may be provided further outward than the venting path.

The battery pack may further include a module case configured to group and store the plurality of battery cells and having a venting hole formed on at least one side thereof so as to discharge the venting gas to the outside.

The cover frame may have a gas inlet configured to face the venting hole.

The cover frame may be located on a top of the module case, and the venting hole may be formed on an upper surface of the module case and is configured to communicate with the gas inlet.

The battery pack may further include a cover member configured to cover the gas inlet and be opened by heat or pressure.

The cover frame may include a partition provided between the venting path and the cooling path.

The partition may be configured such that at least a portion thereof is opened by venting gas inside the venting path.

The cover frame may further include a guide member configured to protrude from a surface of the partition toward the venting path.

The cooling path may be configured to partially protrude toward the venting path.

The cooling path and the venting path may be disposed in a horizontal direction.

According to another aspect of the present disclosure, there is provided a vehicle including a battery pack according to the present disclosure.

### Advantageous Effects

According to one aspect of the present disclosure, it is possible to secure efficient cooling performance and safe venting performance of the battery pack.

Furthermore, according to another aspect of the present disclosure, even if an event such as thermal runaway occurs in a specific battery module, it is possible to effectively suppress the heat from propagating to other battery modules by cooling venting gas generated in the battery module.

Accordingly, the thermal runaway propagation between the battery modules can be prevented or suppressed, thereby ensuring the safety and reliability of the battery pack.

According to another aspect of the present disclosure, it is possible to prevent or delay events due to thermal runaway, such as a fire or explosion, in a device equipped with a battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a cross-sectional view of a battery pack taken along line I - I' in FIG. 1 according to an embodiment of the present disclosure.
FIG. 4 is a cross-sectional view of a battery pack taken along line I - I' in FIG. 1 according to another embodiment of the present disclosure.
FIG. 5 is a cross-sectional view of a battery pack taken along line I - I' in FIG. 1 according to another embodiment of the present disclosure.
FIG. 6 is a lower perspective view of a cover frame included in a battery pack according to another embodiment of the present disclosure, which illustrates a gas inlet.
FIG. 7 is a perspective view of a battery pack according to another embodiment of the present disclosure, which illustrates a gas outlet.
FIG. 8 is a cross-sectional view illustrating an embodiment in which a cover member is applied to a battery pack according to another embodiment of the present disclosure.
FIG. 9 is a cross-sectional view of a battery pack according to another embodiment of the present disclosure, which illustrates an embodiment in which at least a portion of a partition is opened.
FIG. 10 is a cross-sectional view of a battery pack according to another embodiment of the present disclosure, which illustrates an embodiment in which a partition is provided with a guide member.
FIG. 11 is a cross-sectional view of a battery pack according to another embodiment of the present disclosure, which illustrates an embodiment of a cooling path configured to protrude at least in part.
FIG. 12 is a cross-sectional view of a battery pack taken along line II - II' in FIG. 1 according to another embodiment of the present disclosure.
FIG. 13 is a top view of a battery pack according to another embodiment of the present disclosure.
FIG. 14 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

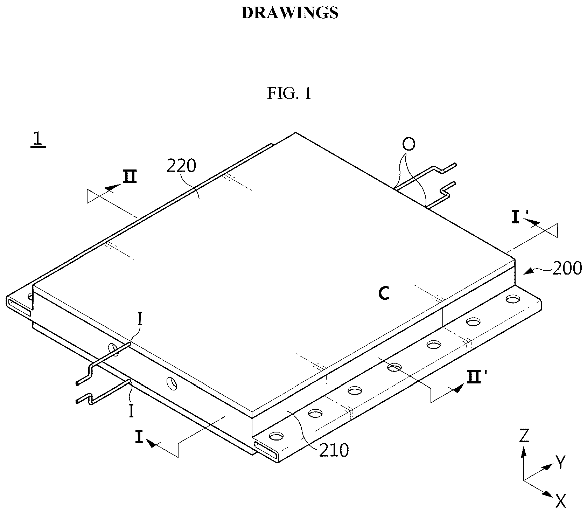

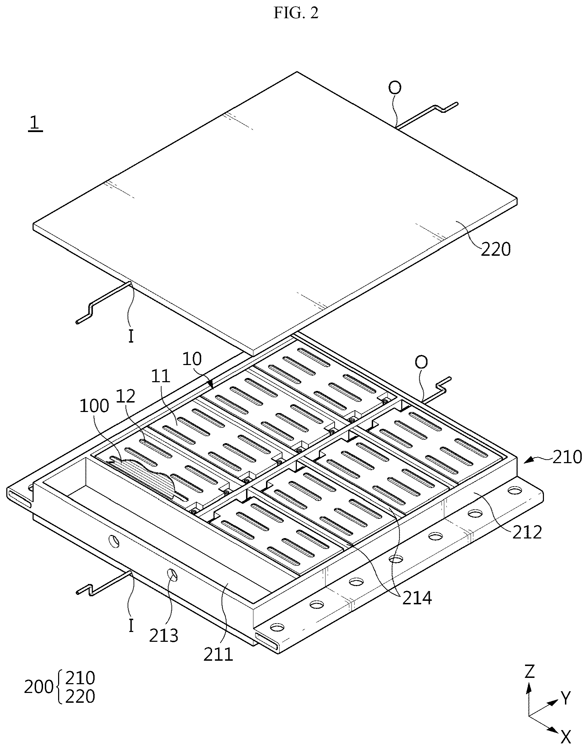

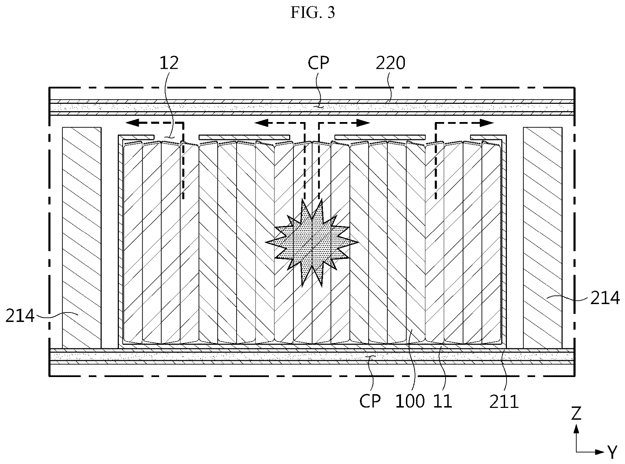

FIG. 1 is a perspective view of a battery pack according to an embodiment of the present disclosure, FIG. 2 is an exploded perspective view of a battery pack according to an embodiment of the present disclosure, and FIG. 3 is a cross-sectional view of a battery pack taken along line I - I' in FIG. 1 according to an embodiment of the present disclosure.

Referring to FIGS. 1 to 3, a battery pack 1 according to an embodiment of the present disclosure may include a battery cell 100 and a pack case 200.

Referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends outside the cell case, thereby functioning as an electrode terminal. In this case, the plurality of battery cells 100 may be electrically connected to each other.

The battery cell 100 may be a pouch-type secondary battery. The cell case of the pouch-type secondary battery may be configured as a pouch in which a metal layer made of aluminum is interposed between polymer layers.

The plurality of battery cells 100 may be arranged side by side in the front-back direction (X-axis direction) while standing in the vertical direction (Z-axis direction), as shown in FIG. 2.

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as illustrated in the drawings, it is obvious that a cylindrical or prismatic secondary battery may also be applied to the battery cell 100.

The pack case 200 may be configured to store the plurality of battery cells 100. The pack case 200 may be provided in a box including a plurality of frames. The pack case 200 may be made of a material capable of securing mechanical strength, such as metal such as steel or SUS or plastic, or may include such a material in order to safely protect the battery cells 100 stored therein.

Specifically, the pack case 200 may include a body frame 210 and a cover frame 220.

The body frame 210 may be configured to store the plurality of battery cells 100. The body frame 210 may be configured such that the plurality of battery cells 100 are seated thereon. In addition, the body frame 210 may be configured to surround the side surfaces of the plurality of battery cells 100. In addition, the body frame 210 may be configured to have an opening on at least one side.

The cover frame 220 may be provided in the opening of the body frame 210. The cover frame 220 may be coupled to the body frame 210. For example, as in the embodiment illustrated in the drawing, the body frame 210 may have an upper opening, and the cover frame 220 may be provided on the upper opening to cover the top of the plurality of battery cells 100.

The cover frame 220 may be located on the side where venting gas is discharged from the plurality of battery cells 100. Specifically, the cover frame 220 may be spaced a predetermined distance apart from the plurality of battery cells 100, and the venting gas generated from the battery cells 100 may flow through the space formed between the cover frame 220 and the battery cells 100. For example, as in the embodiment illustrated in the drawing, the venting gas may be discharged through the top of the battery cells 100, and the cover frame 220 may be provided on the top of the battery cells 100.

A cooling path CP may be formed in the cover frame 220. The cooling path CP may indicate a passage configured such that a cooling medium such as cooling water may flow therethrough. The cooling path CP may be formed in the inner space of the cover frame 220. That is, an empty space in which a cooling medium such as cooling water flows may be formed inside the cover frame 220, and the space may be defined as a cooling path CP.

According to the above-implemented configuration of the present disclosure, since the cooling path CP of the cover frame 220 is formed on the side where the venting gas is discharged from the battery cell 100, a fluid such as a high-temperature venting gas or flame may be directly cooled. That is, according to the above-implemented configuration of the present disclosure, when a thermal event occurs, heat such as the venting gas discharged from the battery cell 100 may be more efficiently controlled. As a result, the cooling performance of the battery pack 1 may be secured.

In addition, according to the above-implemented configuration of the present disclosure, thermal propagation to other adjacent battery cells 100 may be minimized. Accordingly, thermal runaway propagation may be prevented or suppressed inside the battery pack 1, thereby ensuring the safety and reliability of the battery pack 1.

Meanwhile, referring to FIG. 2, the plurality of battery cells 100 may be modularized into one or more battery modules 10. That is, the battery pack 1 according to the present disclosure includes a plurality of battery modules 10, and the plurality of battery cells 100 included in the battery pack 1 may be divided and included in the plurality of battery modules 10. In this case, the plurality of battery cells 100 included inside the battery module 10 may be electrically connected to each other.

In particular, the battery pack 1 according to the present disclosure may include a module case 11. The module case 11 may be configured to have an empty space formed therein and store at least some of the plurality of battery cells 100 in the inner space. That is, the module case 11 may be a boundary that groups the plurality of battery cells 100 into several battery modules 10 and physically confines the inner space of each battery module 10.

In addition, although not shown in the drawing, the battery module 10 may include a bus-bar assembly and/or module terminal electrically connected to the plurality of battery cells 100 stored therein.

The battery module 10 may include a venting hole 12. The venting hole 12 may be configured such that gas generated from the battery cells 100 stored inside the module case 11 is discharged to the outside of the module case 11.

Specifically, the venting hole 12 may be provided in the module case 11 to enable directional venting in a specific direction. The venting hole 12 may be provided on at least one side of the module case 11. Meanwhile, the number of installations or locations of the venting holes 12 described in the embodiment shown in FIG. 2 are only examples, and may be changed to various other numbers or locations.

Meanwhile, referring to FIGS. 1 to 3, a body frame 210 may include a base frame 211 and a plurality of side frames 212.

The base frame 211 may be configured such that a plurality of battery cells 100 or battery modules 10 are seated thereon. The base frame 211 may form the bottom surface of the pack case 200 and may be provided in a square plate. In addition, the base frame 211 may have a flat upper surface so that the battery cells 100 may be stably seated thereon.

The base frame 211 may have a cooling path CP formed in the inner space. That is, a hollow space may be formed inside the base frame 211 so that a cooling medium may flow through the hollow space.

According to the above-implemented configuration of the present disclosure, the bottom surface of the battery cell 100 or battery module 10 may be cooled, so that the thermal energy accumulation of the battery cell 100 may be minimized. In particular, the heat generation of the battery cell 100 due to the charge/discharge cycle in the normal state of the battery pack 1 may be minimized to secure the cooling performance of the battery pack 1.

The plurality of side frames 212 may be provided to extend upward from respective edges of the base frame 211. The plurality of side frames 212 may be provided to surround the plurality of battery cells 100 or battery modules 10. More specifically, the plurality of side frames 212 may be comprised of a right wall located at the end of the base frame 211 in the +X-axis direction, a rear wall located at the end in the +Y-axis direction, a left wall located at the end in the -X-axis direction, and a front wall located at the end in the -Y-axis direction, thereby forming side surfaces of the pack case 200.

Meanwhile, referring to FIG. 2, the pack case 200 may include a venting device 213. The venting device 213 may be configured to discharge gas generated in the battery cell 100 to the outside of the pack case 200. That is, venting gas or the like discharged from the venting hole 12 may be discharged to the outside of the pack case 200 through the venting device 213.

The venting device 213 may be configured to open by the pressure of the venting gas when the venting gas is generated inside the pack case 200 and the internal pressure increases, thereby discharging the venting gas to the outside of the pack case 200.

For example, the venting device 213 may be configured to be opened and closed depending on the internal pressure of the pack case 200. Alternatively, the venting device 213 may be configured in the form of a hole. Meanwhile, the present disclosure is not limited to a specific type or form of the venting device 213, and various venting devices 213 known at the time of filing the present disclosure may be applied to configure the battery pack 1 of the present disclosure.

Specifically, the venting device 213 may be provided on the side of the pack case 200, that is, on the side frame 212. A plurality of venting devices 213 may be provided. The venting device 213 may be provided on at least one of the plurality of side frames 212. The venting device 213 may be formed on two or more side frames 212, respectively, or two or more venting devices 213 may be formed on one side frame 212.

Meanwhile, the number of installations or positions of the venting devices 213 described in the embodiment shown in FIG. 2 are merely examples, and may be changed to various other numbers or positions.

In addition, the pack case 200 may include a cross-beam 214. The cross-beam 214 may be configured to partition the inner space of the pack case 200. That is, the cross-beam 214 may be configured to partition a plurality of battery cells 100 or a plurality of battery modules 10. The cross-beam 214 may be configured to extend along the left-right direction and/or the front-back direction of the pack case 200. A plurality of cross-beams 214 may be provided.

Meanwhile, the battery pack 1 according to an embodiment of the present disclosure may include an inlet port I configured such that a cooling medium is introduced from the outside into the cooling path CP inside the battery pack 1, and an outlet port O configured such that a cooling medium is discharged from the cooling path CP inside the battery pack 1 to the outside. The inlet port I and the outlet port O may be provided in the base frame 211.

In this case, the inlet port I and the exhaust port O may be provided not only in the base frame 211 but also in the cover frame 220. Accordingly, the cooling medium may flow from the outside of the battery pack 1 to the cooling path CP inside the base frame 211 and the cover frame 220.

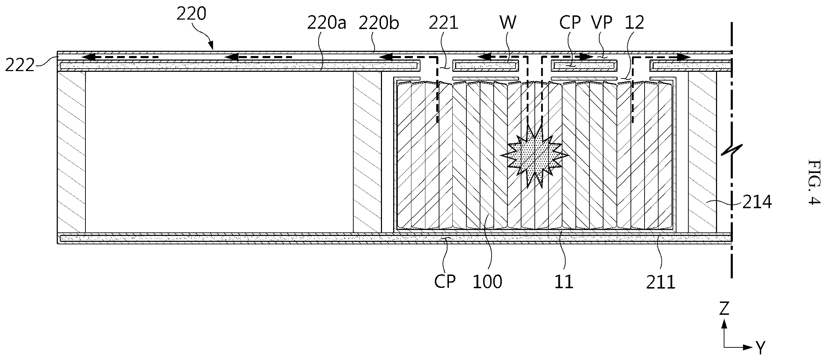

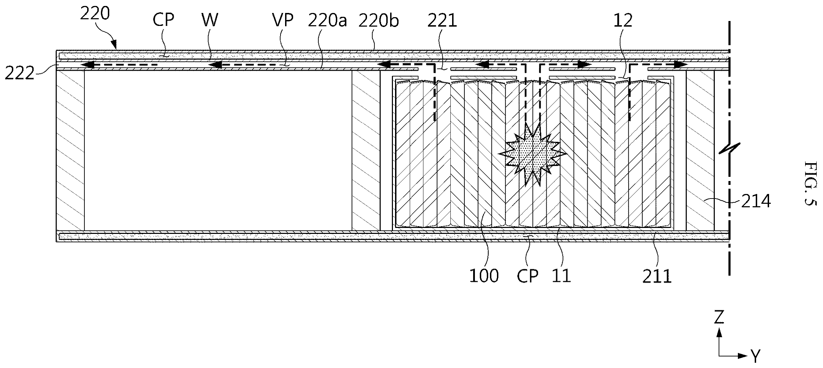

FIG. 4 is a cross-sectional view of a battery pack according to another embodiment of the present disclosure, and FIG. 5 is a cross-sectional view of a battery pack according to another embodiment of the present disclosure. For example, FIG. 4 and FIG. 5 may be cross-sectional views taken along line I - I' in FIG. 1.

Referring to FIG. 4 and FIG. 5, the cover frame 220 may be configured so that a venting path VP is formed in the inner space. That is, an empty space through which venting gas or the like flows may be formed inside the cover frame 220, and the space may be defined as a venting path VP. Accordingly, the venting gas generated in the battery cell 100 may be configured to flow into the venting path VP formed in the inner space of the pack case 200.

That is, the cover frame 220 may be configured such that both the venting path VP and the cooling path CP are formed therein. In this case, the venting path VP may be provided on at least one side of the cooling path CP. In particular, the venting path VP and the cooling path CP may be configured to be in contact with each other. Therefore, it may be configured such that the venting gas or the like comes into contact with the cooling path CP.

According to the above-implemented configuration of the present disclosure, since the venting path VP is provided inside the cover frame 220, the venting gas may be discharged more smoothly in the direction in which the venting gas is discharged from the battery cell 100. Therefore, thermal propagation to other adjacent battery modules 10 may be more efficiently suppressed or prevented.

Furthermore, according to the above-implemented configuration of the present disclosure, since both the venting path VP and the cooling path CP are provided inside the cover frame 220, when thermal runaway occurs in the battery cell 100, the heat of the venting gas or flame inside the venting path VP may be quickly cooled by the cooling medium of the cooling path CP. That is, according to the above-implemented configuration of the present disclosure, the venting gas or the like may flow into the cover frame 220, and at the same time, the venting gas or the like may be cooled by the cooling medium. As a result, the heat of the venting gas or the like discharged may be controlled more efficiently, thereby securing the cooling performance of the battery pack 1.

In particular, the venting path VP and the cooling path CP may be disposed in the direction from the outside to the inside of the cover frame 220. That is, the venting path VP and the cooling path CP may be disposed in the direction perpendicular to the direction in which the venting gas and/or the cooling medium flows therein. For example, as in the embodiments illustrated in FIGS. 4 and 5, the venting gas and/or the cooling medium may flow along the horizontal direction, and the venting path VP and the cooling path CP may be disposed to be stacked in the height direction of the battery pack 1.

The cooling path CP may be disposed parallel to the venting path VP. That is, the cooling path CP may be disposed parallel to the venting path VP. For example, as in the embodiments illustrated in FIGS. 4 and 5, the venting path VP and the cooling path CP may extend in the horizontal direction and may be disposed along the direction from the outside to the inside of the cover frame 220.

Preferably, as in the embodiments illustrated in the drawings, the description will be based on the case where the cover frame 220 is disposed on the top of the battery cell 100, but the location of the cover frame 220 may vary.

According to the above-implemented configuration of the present disclosure, since the cooling path CP and the venting path VP are disposed in the direction from the outside to the inside of the cover frame 220, the area where the venting path VP comes into contact with the cooling path CP may be maximized. That is, according to the above-implemented configuration, the cooling medium of the cooling path CP may be configured to come into contact with the entire area of the venting path VP. Therefore, according to the above-implemented configuration of the present disclosure, when thermal runaway occurs in the battery cell 100, the heat such as the venting gas or flame inside the venting path VP may be cooled more quickly by the cooling medium.

More specifically, the cover frame 220 may be configured in a multi-plate structure. The cover frame 220 may include a first cover 220a, a second cover 220b, and a partition W. The first cover 220a may be provided to face the battery cell 100 or the battery module 10. The first cover 220a may be configured to form the innermost surface of the cover frame 220.

The second cover 220b may be provided on the outer side of the first cover 220a so as to be spaced a predetermined distance apart from the first cover 220a. The second cover 220b may be configured to form the outermost surface of the cover frame 220, as an outer surface of the battery pack 1.

The first cover 220a and the second cover 220b may be provided parallel to each other. As in the embodiment illustrated in the drawing, the first cover 220a and the second cover 220b may be disposed along the height direction of the cover frame 220. A venting path VP and a cooling path CP may be formed between the first cover 220a and the second cover 220b.

The partition W may be provided between the first cover 220a and the second cover 220b. The partition W may be configured to separate the venting path VP and the cooling path CP from each other. That is, the partition W may be provided between the venting path VP and the cooling path CP.

The partition W may extend in the horizontal direction. That is, the venting path VP and the cooling path CP may be configured to extend in the horizontal direction, and the partition W may also be configured to extend in the direction in which the venting path VP and the cooling path CP extend. Therefore, the venting gas or the like may be configured to be cooled while being in contact with the surface of the partition W constituting the cooling path CP.

As shown in the embodiment in FIG. 4 and FIG. 5, the partition W may be provided parallel to the first cover 220a and the second cover 220b. That is, the first cover 220a, the partition W, and the second cover 220b may be disposed along the height direction of the cover frame 220. For example, when the battery pack 1 is viewed from the side, the first cover 220a, the partition W, and the second cover 220b may be arranged in sequence from the bottom.

As an example, the cooling path CP may be provided on the inner side of the venting path VP. For example, as in the embodiment illustrated in FIG. 4, the venting path VP may be provided on the outer side of the partition W, and the cooling path CP may be provided on the inner side thereof. That is, the venting path VP may be formed between the second cover 220b and the partition W, and the cooling path CP may be formed between the first cover 220a and the partition W. In this case, the cooling path CP may be provided so as to face the battery cell 100.

As a result, as indicated by the dotted arrows illustrated in FIG. 4, venting gas or the like generated in the battery cell 100 may be discharged through the venting hole 12, pass through the cooling path CP through the gas inlet 221, and flow into the venting path VP provided relatively on the outer side.

According to the above-implemented configuration of the present disclosure, since the cooling path CP is provided to face the battery cell 100 or the battery module 10, the battery cell 100 may be cooled even in a normal state where a thermal event does not occur.

As another embodiment, the cooling path CP may be provided further outward than the venting path VP. In this case, the first cover 220a, the partition W, and the second cover 220b may also be configured to extend in the horizontal direction and to be disposed parallel to each other along a direction from the outside to the inside of the cover frame 220. For example, as in the embodiment illustrated in FIG. 5, the cooling path CP may be provided on the outer side of the partition W, and the venting path VP may be provided on the inner side thereof. That is, the cooling path CP may be formed between the second cover 220b and the partition W, and the venting path VP may be formed between the first cover 220a and the partition W. In this case, the cooling path CP may be provided to face the battery cell 100.

As a result, as indicated by the dotted arrows in FIG. 5, the venting gas or the like generated from the battery cell 100 may be discharged through the venting hole 12 and directly introduced into the venting path VP inside the cover frame 220.

According to the above-implemented configuration of the present disclosure, since the venting path VP is disposed between the battery cell 100 and the cooling path CP, the venting gas or flame generated from the battery cell 100 may quickly move to the venting path VP and may be cooled by the cooling medium inside the cooling path CP at the same time.

In addition, according to the above-implemented configuration of the present disclosure, the venting gas or flame generated from the battery cell 100 may be directly introduced into the venting path VP, so that a structure penetrating the cooling path CP is unnecessary. Therefore, the structure and manufacturing process of the battery pack 1 may be simplified.

In addition, since the high-temperature venting gas has a strong tendency to go upward, it may also head upward inside the venting path VP in the cover frame 220. In this case, according to the above-implemented configuration of the present disclosure, since the cooling path CP is provided on the top of the venting path VP, the venting gas or the like directed toward the partition W may be cooled.

In addition, according to the above-implemented configuration of the present disclosure, since the heat of the venting gas or the like may not be exposed to the outside of the battery pack 1, the temperature may be prevented from rising outside the battery pack 1.

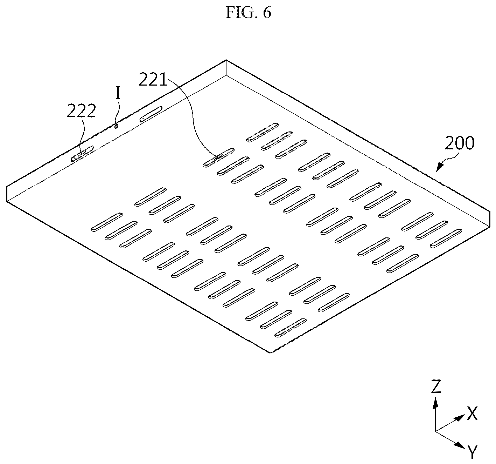

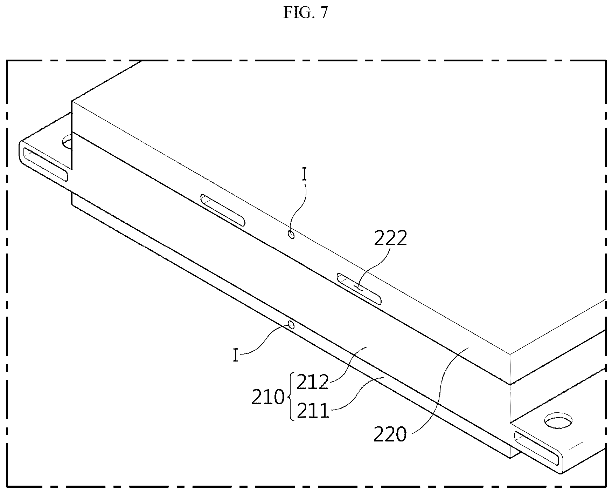

FIG. 6 is a lower perspective view of a cover frame included in a battery pack according to another embodiment of the present disclosure, which illustrates a gas inlet. In addition, FIG. 7 is a perspective view of a battery pack according to another embodiment of the present disclosure, which illustrates a gas outlet.

Referring to FIGS. 4 to 6, a gas inlet 221 may be provided in the cover frame 220. The gas inlet 221 may be configured to allow venting gas to flow into the venting path VP. That is, the gas inlet 221 may be provided to communicate the venting path VP and the battery cell 100 with each other.

In this case, the gas inlet 221 may be formed in the first cover 220a. Alternatively, as in the embodiment illustrated in FIG. 4, in the case where the cooling path CP is provided on the inner side of the venting path VP, the gas inlet 221 may be provided in the form of a hole formed in the first cover 220a and the partition W.

A plurality of gas inlets 221 may be provided. In particular, the gas inlet 221 may be configured to face the venting hole 12. For example, as in the embodiment illustrated in FIG. 16, a plurality of gas inlets 221 corresponding to the number of venting holes 12 may be provided at positions and in sizes corresponding to the venting holes 12.

As a result, when a thermal event occurs in the battery module 10, the venting gas or the like may be guided to move directly toward the venting path VP. According to the above-implemented configuration of the present disclosure, the venting gas or the like discharged from the venting hole 12 facing the venting path VP may move directly to the venting path VP formed in the pack case 200, so that the venting gas or the like may be discharged to the outside more quickly and smoothly.

Meanwhile, as in the embodiment illustrated in the drawing, the cover frame 220 may be positioned on the top of the battery cells 100, and the venting holes 12 may be formed on the upper surface of the module case 11. The venting hole 12 may be configured to communicate with the gas inlet 221.

According to the above-implemented configuration of the present disclosure, as the venting path VP is formed on the top of the battery cells 100, a fluid such as a high-temperature venting gas or a flame having a strong tendency to move upward may quickly flow into the venting path VP.

In addition, referring to FIG. 4, FIG. 5, and FIG. 7, in the case where the venting path VP is formed inside the cover frame 220, the cover frame 220 may be provided with a gas outlet 222. The gas outlet 222 may be configured to communicate the venting path VP inside the cover frame 220 with the outside of the cover frame 220. In this case, the venting device 213 may be excluded.

The gas outlet 222 may be provided at the end of the venting path VP inside the cover frame 220. In this case, the gas outlet 222 may be provided in the form of a hole, but the present disclosure is not limited to a specific type or form of the gas outlet 222. For example, as in the embodiment illustrated in FIG. 5, in the case where the venting path VP is formed between the partition W and the first cover 220a, the gas outlet 222 may be formed between the partition W and the first cover 220a.

Meanwhile, a plurality of gas outlets 222 may be provided. The gas outlet 222 may be provided on at least one side of the cover frame 220. The gas outlet 222 may be formed on two or more sides, respectively, or two or more gas outlets 222 may be formed on one side. For example, as illustrated in FIG. 7, two gas outlets 222 may be formed on each of two sides of the cover frame 220.

Meanwhile, the number, locations, or sizes of the gas outlets 222 described in the embodiment in FIG. 7 are merely examples, and may be changed to various other numbers, locations, or the like.

Accordingly, as indicated by the dotted arrows in FIGS. 4 and 5, the venting gas or the like, introduced into the venting path VP inside the cover frame 220 through the gas inlet 221, may be discharged to the outside of the cover frame 220 through the gas outlet 222.

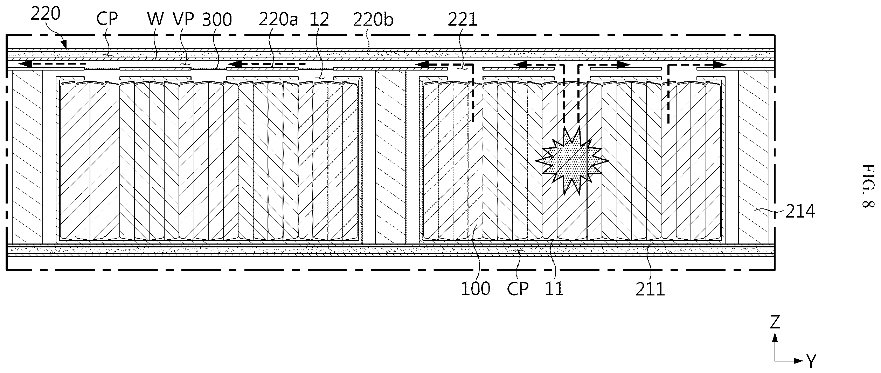

FIG. 8 is a cross-sectional view illustrating an embodiment in which a cover member is applied to a battery pack according to another embodiment of the present disclosure.

The battery pack 1 according to an embodiment of the present disclosure may further include a cover member 300. Referring to FIG. 8, the cover member 300 may be configured to cover the gas inlet 221. A plurality of cover members 300 may be provided, and the cover member 300 may be provided in at least one of the multiple gas inlets 221. For example, the cover member 300 may be provided in each of the multiple gas inlets 221. The cover member 300 may be provided on the first cover 220a where the gas inlet 221 is formed.

The cover member 300 may be configured to be opened by heat or pressure when a thermal event occurs. For example, the cover member 300 may be configured to be melted by heat such as venting gas. Alternatively, the cover member 300 may be configured to be ruptured by pressure such as venting gas.

In particular, among the plurality of cover members 300, only the cover member 300 provided on the side of the battery module 10 where the thermal event occurs may be configured to be opened. Specifically, referring to the dotted arrows shown in FIG. 8, only the cover member 300 provided on the side of the battery module 10 where the thermal event occurs may be opened by the venting gas discharged through the venting hole 12 of the battery module 10 where the thermal event occurs. Accordingly, the gas inlet 221 may be opened so that the venting gas is introduced into the venting path VP formed inside the cover frame 220. On the other hand, the remaining cover members 300 provided in other adjacent battery modules 10 may remain in a closed state. Therefore, it may be configured so that the venting gas or the like inside the venting path VP is not discharged to other battery modules 10.

According to the above-implemented configuration of the present disclosure, when thermal runaway occurs in the battery cell 100, high-temperature gas or flame generated in each battery module 10 may be independently discharged to the outside, so that thermal propagation to the battery cells 100 provided in other battery modules 10 may be minimized. That is, according to the above-implemented configuration of the present disclosure, even if a thermal event occurs in a battery module 10, other battery modules 10 may not be affected. Accordingly, the thermal runaway propagation inside the battery pack 1 may be prevented or suppressed, thereby ensuring the safety and reliability of the battery pack 1.

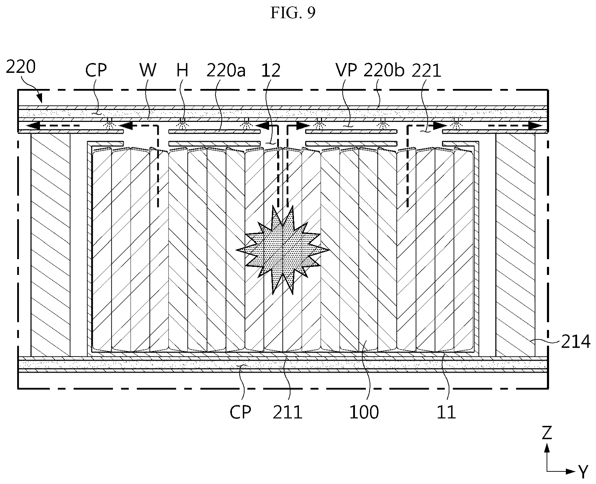

FIG. 9 is a cross-sectional view of a battery pack according to another embodiment of the present disclosure, which illustrates an embodiment in which at least a portion of a partition is opened.

Referring to FIG. 9, the partition W may be configured so that at least a portion thereof is opened by the venting gas inside the venting path VP. Accordingly, a cooling medium inside the cooling path CP may be discharged toward the venting path VP through the opened portion of the partition W.

According to the above-implemented configuration of the present disclosure, when a thermal event occurs in a battery module 10, the cooling medium may be discharged from the cooling path CP to the venting path VP, thereby cooling the heat of the venting gas and extinguishing flame or the like. Furthermore, particles such as sparks may be suppressed from flowing inside the venting path VP by the pressure of the discharged cooling medium.

Specifically, a partition hole H configured to open when a thermal event occurs may be provided in the partition W. For example, a sealing member may be configured to cover the partition hole H in a normal state, and when a thermal event occurs, the sealing member may melt to open the partition hole H. Alternatively, a notch may be provided along the partition hole H so that the partition hole H may be opened by heat or pressure.

A plurality of partition holes H may be provided and may be arranged in multiple columns and rows. In addition, the partition hole H may be provided in a small size so that the cooling medium has a predetermined pressure when discharged.

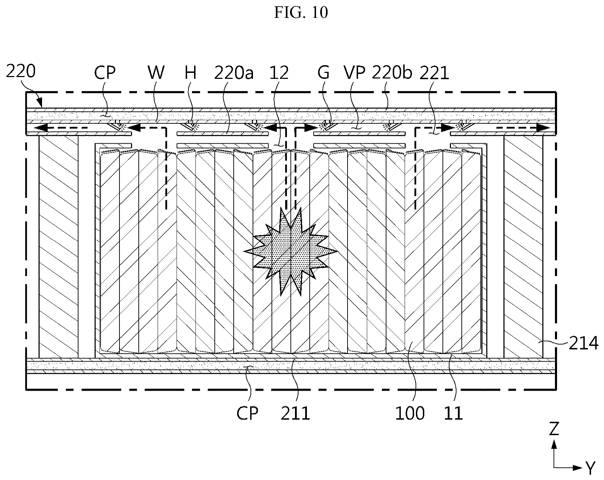

FIG. 10 is a cross-sectional view of a battery pack according to another embodiment of the present disclosure, which illustrates an embodiment in which a partition is provided with a guide member.

In particular, the direction in which the cooling medium is discharged from the partition hole H may be opposite to the direction in which the venting gas flows (see the dotted arrows illustrated in FIG. 10). The venting gas may be discharged toward the outside of the cover frame 220, and the cooling medium discharged from the partition hole H may be discharged toward the inside of the cover frame 220. For example, as shown in the embodiment in FIG. 10, the cooling medium may be configured to be discharged from the partition hole H toward the gas inlet 221.

To this end, the cover frame 220 may further include a guide member G. The guide member G may be configured to protrude from the outer surface of the partition W toward the venting path VP. The guide member G may be configured to guide the direction of the cooling medium discharged from the partition hole H. In particular, the guide member G may guide the cooling medium released from the partition hole H to be discharged toward the gas inlet 221.

As in the embodiment illustrated in FIG. 10, the guide member G may be provided in an oblique shape and may be provided to face the gas inlet 221. That is, the guide member G may be configured to protrude from the outer surface of the partition W toward the inside of the venting path VP, and may be directed to the gas inlet 221 at its distal end. The guide member G may be provided to form an acute angle with the partition W. The shape, length, or direction of the guide member G may vary depending on the location of the gas inlet 221.

In addition, a plurality of guide members G may be provided. The plurality of guide members G may be arranged to be spaced apart from each other in the horizontal direction. For example, the plurality of guide members G may be arranged to be spaced apart from each other along the longitudinal direction (Y-axis direction in FIG. 10) of the partition W.

According to the above-mentioned implemented configuration of the present disclosure, the flow of venting gas through the venting path VP may be impeded or the contact area and/or contact time with the cooling path CP may be increased. Accordingly, the time for the venting gas or flame to stay inside the venting path VP may increase, thereby cooling the venting gas more efficiently by the cooling medium.

In addition, according to the above-implemented configuration of the present disclosure, the venting gas or flame may be reflected by the guide member G inside the venting path VP, thereby further suppressing the flow of sparks or flames with strong straightness. In this case, particles of sparks or the like may be captured by grooves or the like formed between the guide members G. Therefore, sparks or flames may be prevented from being discharged to the outside of the battery pack 1.

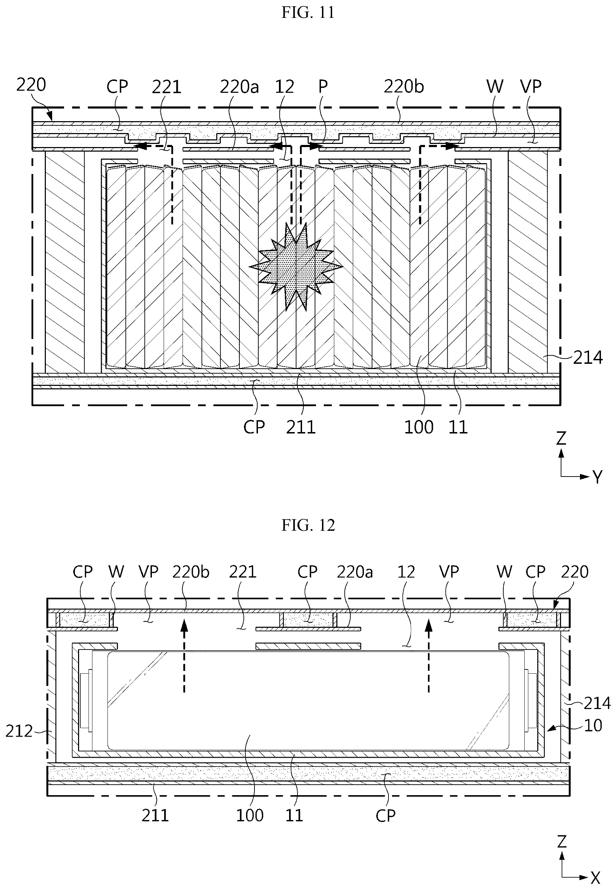

FIG. 11 is a cross-sectional view of a battery pack according to another embodiment of the present disclosure, which illustrates an embodiment of a cooling path configured to protrude at least in part.

Referring to FIG. 11, the cooling path CP may be configured to partially protrude toward the venting path VP. Specifically, the partition W may include a protrusion P. The protrusion P may be formed such that at least a portion of the partition W protrudes toward the venting path VP. The protrusion P may be configured to be filled with a cooling medium. That is, the protrusion P may be configured such that convex and concave portions are repeatedly formed along the horizontal direction.

A plurality of protrusions P may be provided. The plurality of protrusions P may be configured to be spaced apart from each other along the partition W. For example, the protrusions P may be configured to extend in the left-right direction and to be spaced apart from each other in the longitudinal direction.

In addition, a space through which the venting gas flows may be provided between the protrusions P. Accordingly, as indicated by the dotted arrows in FIG. 11, a venting path VP may be formed in the space between adjacent protrusions P, so that the venting gas or the like may flow between the protrusions P.

According to the above-implemented configuration of the present disclosure, since at least a portion of the cooling path CP is configured to protrude toward the venting path VP, the area in which the venting gas or the like flowing inside the venting path VP comes into contact with the cooling medium may increase. Therefore, the venting gas or the like may be quickly cooled, thereby minimizing thermal propagation to other battery cells 100.

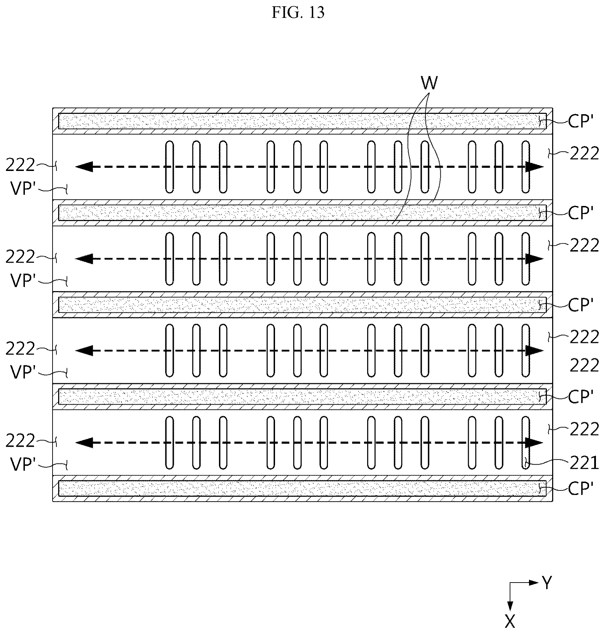

FIG. 12 is a cross-sectional view of a battery pack taken along line II - II' in FIG. 1 according to another embodiment of the present disclosure. FIG. 13 is a top view of a battery pack according to another embodiment of the present disclosure.

Meanwhile, a cooling path CP may be provided on at least one side of a venting path VP. As in the above-described embodiment, the cooling path CP may be provided only on the outer or inner side of the venting path VP.

Alternatively, unlike the above-described embodiment, the cooling path CP may be provided on both sides of the venting path VP. For example, the venting path VP may extend horizontally inside the cover frame 220, and the cooling path CP may be formed on the top and bottom of the venting path VP, thereby forming a triple structure.

According to the above-implemented configuration of the present disclosure, since the cooling path CP is formed on both sides of the venting path VP, the area of the cooling path CP that comes into contact with the venting gas or the like inside the venting path VP increases, so that the venting gas or the like may be cooled more quickly. Therefore, the cooling efficiency of the venting gas may be further increased.

As an example, the cooling path CP and the venting path VP may be disposed in the horizontal direction. That is, as illustrated in FIG. 12, the partitions W may be disposed to be vertically erected between the first cover 220a and the second cover 220b and spaced apart from each other along the horizontal direction (e.g., the left-right direction of the cover frame 220).

Specifically, the venting path VP may include a plurality of unit venting paths VP', and the cooling path CP may include a plurality of unit cooling paths CP'. In this case, as illustrated in FIG. 13, the plurality of unit venting paths VP' and the plurality of unit cooling paths CP' may be arranged alternately in the horizontal direction (e.g., the left-right direction of the cover frame 220). That is, the unit cooling path CP' may be disposed on both sides of each of the plurality of unit venting paths VP'.

The unit venting path VP' may be provided at a position facing the venting hole 12. In this case, the gas inlet 221 may be configured to face the venting hole 12. In addition, the gas outlet 222 may be formed in each of the plurality of unit venting paths VP'. For example, as illustrated in FIG. 13, the gas outlet 222 may be formed in each of both ends of the plurality of unit venting paths VP'.

Meanwhile, the unit cooling path CP' may be formed between the venting holes 12, that is, between the unit venting paths VP'. In this case, the inlet port I and the outlet port O may be formed in each unit cooling path CP'.

According to the above-implemented configuration of the present disclosure, since a plurality of unit venting paths VP' are provided to face the battery cell 100, the venting gas or the like may be vented and discharged to the outside more quickly.

Furthermore, according to the above-implemented configuration of the present disclosure, the venting gas or the like generated in the battery cell 100 where the thermal event occurred may directly flow into the unit venting path VP' facing the battery cell 100, so that the venting gas or the like may be vented to the outside more quickly. In addition, since the gas inlets 221 are respectively provided in the plurality of unit venting paths VP', the heat may be prevented from propagating to other battery modules 10 or battery cells 100 where the thermal event did not occur.

In addition, according to the above-implemented configuration of the present disclosure, the area where the venting gas flowing inside the venting path VP comes into contact with the cooling medium may increase. Therefore, the venting gas may be quickly cooled, thereby minimizing thermal propagation to other battery cells 100 or battery modules 10.

Meanwhile, although not shown in the drawing, the cover member 300, partition hole H, guide member G, and protrusion P described above may also be applied to the embodiments illustrated in FIGS. 12 and 13.

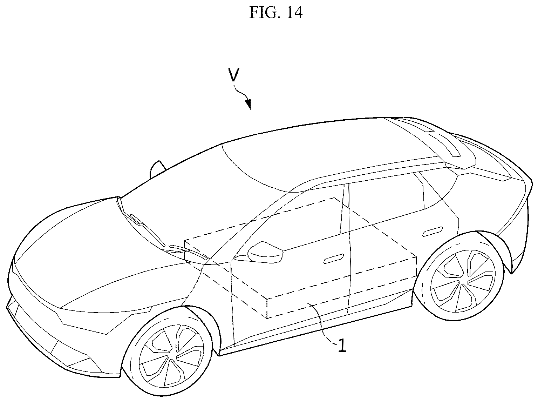

FIG. 14 is a schematically perspective view of a vehicle including a battery pack according to an embodiment of the present disclosure.

Referring to FIG. 14, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may operate by power supplied from the battery pack 1 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery pack comprising:
a plurality of battery cells; and
a pack case comprising a body frame configured to store the plurality of battery cells and have an opening formed on at least one side, and a cover frame provided in the opening of the body frame so as to be located on a side where venting gas is discharged from the plurality of battery cells and having a cooling path formed in an inner space such that a cooling medium flows therethrough.

2. The battery pack according to claim 1,
wherein the cover frame has a venting path disposed on at least one side of the cooling path in an inner space and configured to allow the venting gas to flow therethrough.

3. The battery pack according to claim 2,
wherein the cooling path and the venting path are disposed in parallel along a direction from an outside to an inside of the cover frame.

4. The battery pack according to claim 3,
wherein the cooling path is provided further outward than the venting path.

5. The battery pack according to claim 4, further comprising
a module case configured to group and store the plurality of battery cells and having a venting hole formed on at least one side thereof so as to discharge the venting gas to an outside.

6. The battery pack according to claim 5,
wherein the cover frame has a gas inlet configured to face the venting hole.

7. The battery pack according to claim 6,
wherein the cover frame is located on a top of the module case, and
wherein the venting hole is formed on an upper surface of the module case and is configured to communicate with the gas inlet.

8. The battery pack according to claim 6, further comprising
a cover member configured to cover the gas inlet and be opened by heat or pressure.

9. The battery pack according to claim 2,
wherein the cover frame comprises a partition provided between the venting path and the cooling path.

10. The battery pack according to claim 9,
wherein the partition is configured such that at least a portion thereof is opened by venting gas inside the venting path.

11. The battery pack according to claim 10,
wherein the cover frame further comprises a guide member configured to protrude from a surface of the partition toward the venting path.

12. The battery pack according to claim 2,
wherein the cooling path is configured to partially protrude toward the venting path.

13. The battery pack according to claim 2,
wherein the cooling path and the venting path are disposed in a horizontal direction.

14. A vehicle comprising a battery pack according to any one of claims 1 to 13.
